# EUROPÄISCHE PATENTSCHRIFT

(11) **EP 3 312 341 B1**
(45) Veröffentlichungstag und Bekanntmachung des Hinweises auf die Patenterteilung: **25.09.2019**
(21) Anmeldenummer: 17196576.7
(22) Anmeldetag: 16.10.2017
(51) Int. Cl.: E01B 7/12

(54) **FLÜGELSCHIENE EINES HERZSTÜCKS SOWIE VERFAHREN ZUM HERSTELLEN EINES HERZSTÜCKS**
WING RAILS OF A FROG AND METHOD FOR PRODUCING A FROG
RAIL À AILERONS D'UN COEUR DE CROISEMENT AINSI QUE PROCÉDÉ DE FABRICATION D'UN COEUR DE CROISEMENT.

(30) Priorität: 24.10.2016 DE 102016120200
(43) Veröffentlichungstag der Anmeldung: 25.04.2018
(73) Patentinhaber: voestalpine BWG GmbH, 35510 Butzbach (DE); voestalpine VAE GmbH, 1010 Wien (AT)
(72) Erfinder: ROHLMANN, Dipl.-Ing. Johannes, 14776 Brandenburg (DE); SCHMOCK, Dipl.-Ing. Martin, 14789 Bensdorf (DE); HASELOFF, Dipl.-Ing. (FH) Nils, 14776 Brandenburg (DE)
(74) Vertreter: Stoffregen, Hans-Herbert

(56) Entgegenhaltungen:
- EP-A1- 0 143 289
- DE-C- 946 066
- FR-A- 1 362 863
- US-A- 3 395 276

## Beschreibung

Die Erfindung bezieht sich auf eine Flügelschiene eines Herzstückbereichs umfassend ein Herzstück mit Herzstückspitze, das über Abstandselemente mit der Flügelschiene verbunden ist, und wobei im Bereich der Herzstückspitze ein Radüberlaufbereich zwischen dem Herzstück und der Flügelschiene verläuft. Ferner nimmt die Erfindung Bezug auf ein Verfahren zum Herstellen und Montieren eines Herzstücks einer Weiche.

Der Herzstückbereich als Teil einer Weiche ermöglicht die Stetigkeit zweier kreuzender Gleise durch Schneiden sich gegenüberliegender Fahrkanten. Der Herzstückbereich umfasst ein Herzstück und zwei außenliegende Fahrschienen. Ferner sind Radlenker vorgesehen. Das Herzstück umfasst Herzstückblock und Flügelschienen. Der Herzstückblock weist Herzstückspitze und Anschlussschienen auf. Die Herzstückspitze kann starr oder beweglich sein.

Der EP 1 455 016 A2 ist ein Herzstück mit beweglicher Herzstückspitze zu entnehmen. Dabei können die Flügelschienen an einem blockartigen Grundkörper vorgesehen sein, um die Herzstückspitze dicker als gewöhnlich ausführen zu können.

Ein federbewegliches Herzstück für Rillenschienen ist der EP 1 455 017 A2 zu entnehmen. Das Herzstück ist dabei aus einem Block hergestellt, insbesondere durch abtragendes Bearbeiten oder durch Gießen.

Ein Herzstück mit austauschbarem Einsatz nach der DE 81 05 454 U1 weist Flügelschienen auf, die durchgehend ausgebildet sind und aus einem Material bestehen, wobei der Übergangsbereich zwischen Flügelschienen und dem vorderen Bereich der Herzstückspitze als austauschbarer Einsatz ausgebildet ist.

Der DE 20 2011 005 479 U1 ist ein Rillenschienenherzstück zu entnehmen, das einen austauschbaren Einsatz aus Hartstahl aufweist.

Die EP 0 143 289 A1 bezieht sich auf ein Herzstück, bei dem Flügelschiene und Herzstückspitze als einteiliger Herzstückblock ausgebildet sind.

Aus der FR 1 362 863 A ist ein Herzstück bekannt, bei dem eine Herzstückspitze mit Flügelschienen verschweißt ist.

Eine gleiche Konstruktion findet sich bei der US 3 395 276 A, wobei die Herzstückspitze und die Flügelschienen vorgefertigt oder aus einer Vollschiene herausgearbeitet sind.

Gegenstand der DE 946 066 C ist ein Doppelherzstück. Die Herzstückspitze ist über Futterstück mit entlang der Herzstückspitze verlaufenden Schienenabschnitten verbunden.

Der vorliegenden Erfindung liegt die Aufgabe zugrunde, ein Herzstück mit Flügelschienen derart auszubilden, dass ein gezielter Materialeinsatz entsprechend der Belastung erfolgen kann. Gleichzeitig soll eine konstruktive Vereinfachung im Vergleich zum Stand der Technik gegeben sein. Auch soll eine einfache, jedoch sichere Montage ermöglicht werden.

Zur Lösung einer oder mehrerer Aspekte der der Erfindung zugrundeliegenden Aufgabenstellung ist u.a. vorgesehen, dass die Flügelschiene bzw. jede Flügelschiene einen sich zumindest über die Länge des Radüberlaufbereichs erstreckenden Abschnitt und vorzugsweise zumindest einen mit diesem verbundenen zum Beispiel aus einer Regelschiene oder Regelschienen bestehenden Endabschnitt aufweist, und dass der Abschnitt durch spanende Bearbeitung aus einem geschmiedeten Block mit integral herausgearbeiteten Abstandselementen hergestellt ist und dass der Abschnitt mit dem Herzstückblock über die Abstandselemente durchsetzende Schraubverbindungen verbunden ist.

Insbesondere besteht die Flügelschiene aus dem Abschnitt sowie zumindest der Schiene wie Regelschiene bzw. den Schienen wie Regelschienen.

Erfindungsgemäß werden Flügelschienen verwendet, die im Radüberlaufbereich aus einem geschmiedeten Block - auch Bramme genannt - durch spanende Bearbeitung hergestellt sind, so dass eine hohe Genauigkeit im Hinblick auf die geometrischen Anforderungen erzielt wird. Gleichzeitig werden kritische Eigenspannungen vermieden, die bei der Verwendung von Regelschienen als Flügelschienen durch Biegen bzw. Knicken des vorgewärmten Materials auftreten. Gleichzeitig ergibt sich eine einfache Montage, da die Als Material für den Abschnitt werden Stahlsorten mit einer Härte vorzugsweise von zumindest 300 HB (Brinell-Härte), insbesondere zwischen 300-500 HB, verwendet. Da die Herzstückspitze insbesondere auch ein aus entsprechendem Material bestehendes geschmiedetes Bauteil ist, weist der Überlaufbereich eine hohe Widerstandsfähigkeit auf.

Da insbesondere vorgesehen ist, dass sich der Abschnitt betrachtet von der praktischen Herzstückspitze aus in Richtung des Weichenanfangs über eine Länge LA mit 1000 mm ≤ LA ≤ 2500 mm, insbesondere 1000 mm < LA ≤ 2100 mm, bzw. in Richtung Weichenende über eine Länge LE mit 500 mm ≤ LE ≤ 1500 mm, insbesondere 700 mm ≤ LE ≤ 1500 mm, erstreckt, können außerhalb dieses Bereichs Regelschienen verwendet werden, so dass sich eine kostengünstige Konstruktion ergibt, die jedoch in Bezug auf den Knickpunktbereich überaus präzise ausgebildet ist. Bei den Regelschienen sollte es sich um Vignolschienen handeln.

Praktische Herzstückspitze ist der Beginn der Herzstückspitze, der als Fahrfläche genutzt werden könnte.

Der Hauptknickpunkt der Flügelschiene verläuft innerhalb des Abschnitts. Dabei sollte der Abschnitt vom Hauptknickpunkt aus betrachtet in Richtung des Weichenanfangs eine Länge von 100 mm bis 900 mm, insbesondere von 140 mm bis 840 mm aufweisen. Gleichfalls vom Hauptknickpunkt aus betrachtet sollte der Abschnitt in Richtung des Weichenendes eine Länge zwischen 1000 mm und 2500 mm, insbesondere zwischen 1200 mm und 2300 mm aufweisen.

Der Hauptknickpunkt ist dabei derjenige Punkt, welcher einen theoretischen Schnittpunkt der Fahrkanten bildet und die Flügelschiene eine Richtungs- und Winkeländerung vollzieht, zuzüglich eines Versatzes in Querrichtung in ausreichender Ausprägung, um die Durchfahrt eines Radspurkranzes zu ermöglichen.

Der Versatz in Querrichtung, also der minimale Spalt zwischen den Flügelschienen, sollte zwischen 20 mm und 40 mm liegen.

Der jeweilige Abschnitt einer Flügelschiene kann aus einem geschmiedeten Einzelblock hergestellt sein. Es besteht jedoch auch die Möglichkeit, die Abschnitte der einer Herzstückspitze zugeordneten Flügelschienen als Einheit aus einem geschmiedeten Block herzustellen.

Um zu vermeiden, dass durch die integrale Ausbildung der Abstandselemente, die die nach dem Stand der Technik benötigten Futterstücke ersetzen, Spannungen auftreten könnten, ist vorgesehen, dass eine Querschnittsänderung zwischen den Abstandselementen derart erfolgt, dass sich eine bogenförmige, also konkave Geometrie ergibt. Hierdurch werden Querschnittssprünge vermieden, auch wenn die Abstandselemente herzstückseitig eine flächige Erstreckung aufweisen, die im Bereich von jeweils 100 mm² bis 200 mm², insbesondere 110 mm² bis 140 mm² liegen sollte.

Insbesondere ist auch vorgesehen, dass der aus der Bramme durch spanabhebende Bearbeitung wie Fräsen hergestellte Abschnitt außerhalb seiner Fahrfläche zumindest abschnittsweise eine von einer Regelschiene abweichende Geometrie aufweisen kann, wobei insbesondere vorgesehen ist, dass der Abschnitt in seiner herzstückabgewandten Außenseite die Kontur einer Vollschiene aufweist, wobei im jeweiligen Stirnrandbereich des Abschnitts die Kontur einer Regelschiene vorgesehen ist.

Ein Verfahren zum Herstellen und Montieren eines Herzstückes einer Weiche zeichnet sich insbesondere durch die Verfahrensschritte aus:
- Herstellen einer Herzstückspitze oder eines Herzstückblockes, insbesondere eines aus einer geschmiedeten Herzstückspitze mit vorzugsweise abbrennstumpfgeschweißten Anschlussschienen hergestellten Herzstückblockes,
- Herstellen eines Paars von Flügelschienen, wobei ein Abschnitt einer jeden Flügelschiene aus einem geschmiedeten Block einer Länge herausgearbeitet wird, die sich zumindest über die gesamte Länge des Radüberfahrbereichs zwischen Herzstückspitze bzw. Herzstückblock und Flügelschienen erstreckt, wobei jeder Abschnitt aus dem Flügelschienenblock herausgearbeitete Abstandselemente aufweist, über die der Abschnitt gegenüber der Herzstückspitze bzw. dem Herzstückblock abgestützt ist, und wobei jeder Abschnitt an zumindest einer Stirnseite, vorzugsweise an beiden Stirnseiten, mit Schienenabschnitten wie Regelschienenabschnitten verbunden wird,
- Anordnen des Paares der Flügelschienen in einem Bereich der Weiche, wobei dann, wenn die Abschnitte der Flügelschienen jeweils aus einem geschmiedeten Einzelblock hergestellt sind, die Flügelschienen miteinander verbunden werden,
- Einschieben der Herzstückspitze bzw. des Herzstückblocks in den Zwischenraum zwischen den Abschnitten bis die Abstandselemente an der Herzstückspitze bzw. dem Herzstückblock anliegen, und
- Verbinden der Abschnitte mit der Herzstückspitze bzw. dem Herzstückblock über die Abstützelemente und die Herzstückspitze bzw. den Herzstückblock durchsetzende Schraubverbindungen.

Außerhalb des Bereiches der Abschnitte können zwischen den Regelschienen und der Herzstückspitze bzw. dem Herzstückblock sodann Futterstücke eingesetzt werden, um gleichfalls insbesondere eine hochfeste Verschraubung zwischen den Regelschienen und der Herzstückspitze bzw. dem Herzstückblock vorzunehmen.

Insbesondere ist vorgesehen, dass der Flügelschienenblock derart spanend - wie durch Fräsen - bearbeitet wird, dass der Abschnitt zwischen den Abstandselementen in seiner herzstückseitig verlaufenden Seitenfläche einen gebogenen Verlauf aufweist.

Die Herzstückspitze selbst sollte auch aus einem geschmiedeten Block durch spanende Bearbeitung hergestellt sein.

Vorzugsweise wird für die Flügelschiene bzw. die Flügelschienen ein vorkonturierter Block verwendet, um Material zu sparen.

Unabhängig hiervon kann die Außengeometrie der aus dem Abschnitt und den Regelschienen bestehenden Flügelschiene derjenigen entsprechen, die eine insgesamt aus einer Regelschiene bestehende Flügelschiene aufweist, gleichwenn bevorzugterweise zumindest im Radüberlaufbereich der Abschnitt herzstückspitzenabgewandt eine Vollschienengeometrie aufweisen sollte.

Auch herzstückspitzenzugewandt kann der Abschnitt der Flügelschiene eine von einer Regelschiene wie Vignolschiene abweichende Geometrie aufweisen. Dies gilt selbstverständlich nicht für die Fahrfläche und angrenzende Flanke, also den Kopfbereich, der mit einem Rad wechselwirkt.

Gegenstand der Erfindung ist auch ein Herzstück umfassend einen Herzstückblock mit Herzstückspitze und zu beiden Seiten des Herzstückblocks verlaufenden Flügelschienen, wobei der Herzstückblock über Abstandselemente lösbar mit den Flügelschienen verbunden ist, im Bereich der Herzstückspitze ein Radüberlaufbereich zwischen den Herzstückblock und den Flügelschienen verläuft und jede Flügelschiene ein sich zumindest über die Länge des Radüberlaufbereichs erstreckenden Abschnitt aufweist oder aus diesem besteht, wobei der Abschnitt aus einem geschmiedeten Block mit integral herausgearbeiteten Abstandselementen hergestellt ist.

Ausgestaltungen ergeben sich aus den zuvor beschriebenen Merkmalen sowie den Ausführungsbeispielen.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung bevorzugter Ausführungsbeispiele.

Es zeigen:
- Fig. 1: eine Draufsicht auf ein Herzstück,
- Fig. 2: einen Längsschnitt parallel zur von dem Herzstück gemäß Fig. 1 aufgespannten Ebene,
- Fig. 3: einen Schnitt entlang der Linie B-B in Fig. 1,
- Fig. 4: einen Schnitt entlang der Linie C-C in Fig. 1,
- Fig. 5: einen Schnitt entlang der Linie E-E in Fig. 1,
- Fig. 6: einen Schnitt entlang der Linie G-G in Fig. 1,
- Fig. 7: einen Schnitt entlang der Linie H-H in Fig. 1,
- Fig. 8: einen Schnitt entlang der Linie J-J in Fig. 1,
- Fig. 9: eine geschmiedete Bramme,
- Fig. 10: einen Abschnitt einer Flügelschiene,
- Fig. 11: eine Draufsicht von integral hergestellten Abschnitten eines Paares von Flügelschienen,
- Fig. 12: Abschnitte eines Paares von Flügelschienen und
- Fig. 13: einen Schnitt entlang der Linie K-K in Fig. 1.

Anhand der Figuren wird die erfindungsgemäße Ausbildung eines Herzstücks 10 einer Weiche erläutert, wobei grundsätzlich für gleiche Elemente gleiche Bezugszeichen verwendet werden.

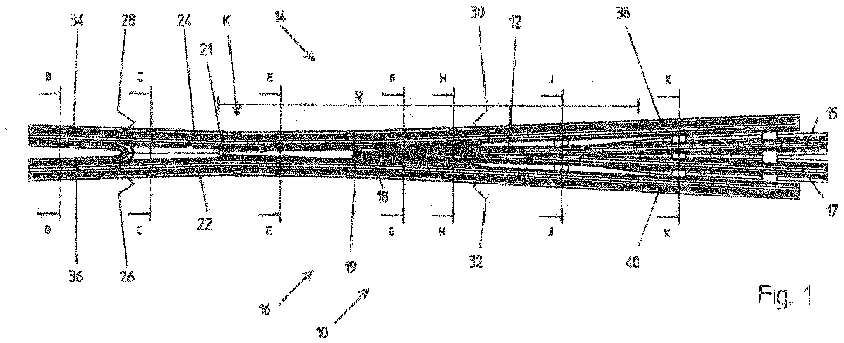

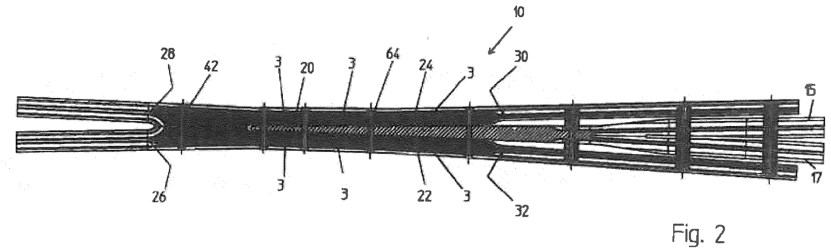

Eine Draufsicht des Herzstücks 10 ist der Fig. 1 zu entnehmen. Ein Längsschnitt ergibt sich aus der Fig. 2.

Entsprechend eines klassischen Aufbaus eines Herzstücks setzt sich dieses aus einem Herzstückblock 12 und entlang dessen Außenseiten verlaufenden Flügelschienen 14, 16 zusammen. Der Herzstückblock 12 besteht aus einer Herzstückspitze 18 mit Anschlussschienen 15, 17, die mit der Herzstückspitze 18 durch Abbrennstumpfschweißen verbunden sein können. Bei dem Herzstück 10 handelt es sich im Ausführungsbeispiel um ein gerades einfaches starres Herzstück.

Die Herzstückspitze 18 kann durch spanende Bearbeitung aus einem geschmiedeten Block - auch Bramme genannt - herausgearbeitet sein. Insoweit wird auf Techniken zurückgegriffen, die dem Stand der Technik zu entnehmen sind.

Entsprechend der Schnittdarstellung gemäß Fig. 2 erstreckt sich in Richtung des Weichenanfangs ein sogenanntes Schwert 20, das Teil der Herzstückspitze 18 ist, jedoch nicht befahren wird. Der Übergangsbereich zwischen den Flügelschienen 14, 16 und der Herzstückspitze 18 verläuft ein Radüberlaufbereich, der in der Fig. 1 prinzipiell als R gekennzeichnet ist.

Weichenanfangsseitig beginnt der Radüberlaufbereich R vor dem Hauptknickpunkt K, wie die Fig. 1 verdeutlicht. Weichenendseitig endet der Radüberlaufbereich dort, wo die Herzstückspitze 18 vollumfänglich das zu übernehmende Rad trägt.

Das freie Ende des Schwerts 20 erstreckt sich bei einem geraden einfachen starren Herzstück mit einem Abstand von 600 mm bis 1100 mm von der Spitze der Herzstückspitze 18, die befahrbar ist. Dies ist die praktische Herzstückspitze 19.

Die Flügelschienen 14, 16 weisen zumindest einen sogenannten Hauptknickpunkt K auf, das heißt, dass Bereiche vor und hinter dem Knickpunkt richtungsmäßig einen Winkel < 180° einschließen. Der Hauptknickpunkt K ist derjenige Punkt, welcher einen theoretischen Schnittpunkt der Fahrkanten bildet, zuzüglich eines Versatzes in Querrichtung in ausreichender Ausprägung, um die Durchfahrt eines Radspurkranzes zu ermöglichen und die Flügelschiene eine Richtungs- und Winkeländerung vollzieht. Der Versatz, also der Spalt zwischen den Flügelschienen sollte zwischen 20 mm und 40 mm liegen.

Im Bereich des Hauptknickpunkts K entstehen Spannungen, wenn die Flügelschienen aus Regelschienen bestehen würden. Auch tritt im Radüberlaufbereich R eine hohe Belastung der Flügelschienen 14, 16 auf. Erfindungsgemäß ist daher vorgesehen, dass die Flügelschienen 14, 16 jeweils einen Abschnitt 22, 24 aufweisen, wobei jede Stirnseite 26, 28 bzw. 30, 32 mit Regelschienen bzw. Regelschienenabschnitten verbunden ist. Dabei sind die Regelschienen 34, 36, 38, 40 mit den Stirnflächen 26, 28, 30, 32 vorzugsweise durch Abbrennstumpfschweißung verbunden.

Die Flügelschienen 16, 18 bzw. die Regelschienen 34, 36 gehen in Richtung Weichenanfang in Zungenschienen über. In Richtung Weichenende enden die Flügelschienen 14, 16 bzw. die mit diesen verbundenen Regelschienen 38, 40.

Bei den Regelschienen handelt es sich insbesondere um Vignolschienen.

Der Abschnitt 22, 24 der Flügelschiene 14, 16 ist entsprechend der erfindungsgemäßen Lehre aus einem geschmiedeten Block durch spanende Bearbeitung hergestellt. Dabei kann der Block aus einem Material mit einer Härte vorzugsweise zwischen 300 und 500 HB bestehen.

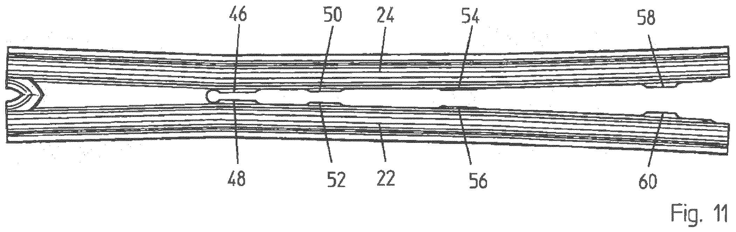

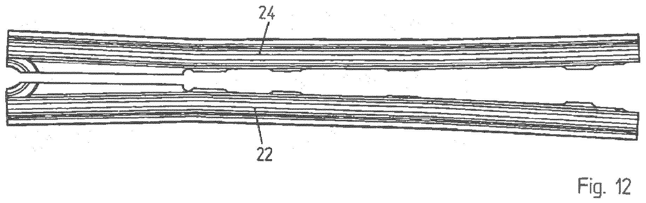

In Richtung Weichenanfang und vor der Spitze 21 des Schwertes 20 liegen die Abschnitte 22, 24 flächig aneinander und sind über hochfeste Schraubverbindungen 42 miteinander verbunden, sofern die Abschnitte 22, 24 jeweils aus einem geschmiedeten Einzelblock hergestellt sein sollten (Fig. 12). Es besteht jedoch auch die Möglichkeit, dass die Abschnitte 22, 24 der Flügelschienen 14, 16 aus einem einzigen Block durch spanende Bearbeitung hergestellt werden, wie sich aus der Fig. 11 ergibt.

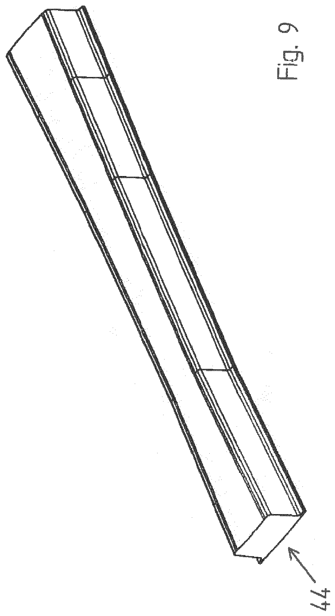

Der Fig. 9 ist ein entsprechender geschmiedeter Block - auch Bramme 44 genannt - zu entnehmen, der aus einem Material mit einer Härte vorzugsweise zwischen 300 und 500 HB bestehen kann und aus dem die Abschnitte 22, 24 gemäß Fig. 11 als Einheit durch spanende Bearbeitung hergestellt werden. Dabei kann die Bramme 44 vorkonturiert sein, wie die Fig. 9 verdeutlicht.

Die Länge des jeweiligen Abschnitts 22, 24 ist dabei derart gewählt, dass der Abschnitt 22, 24 bezogen auf den Weichenanfang vor der Spitze 21 des Schwertes 20 und in Richtung des Weichenendes hinter dem Radüberlaufbereich R verläuft, wie die zeichnerischen Darstellungen verdeutlichen. Dabei wird der Abschnitt 22, 24 derart aus der Bramme herausgearbeitet, dass der Bereich, entlang dem die Herzstückspitze 18 verläuft, Abstandselemente 50, 52, 54, 56, 58, 60 aufweist, die die nach dem Stand der Technik benötigten Futterstücke ersetzen, die zwischen dem Herzstückblock 12 und der zugewandten Seite der Flügelschienen 14, 16 eingesetzt werden, um den gewünschten Spalt zwischen der Herzstückspitze 18 und den Flügelschienen 14, 16 zu erhalten.

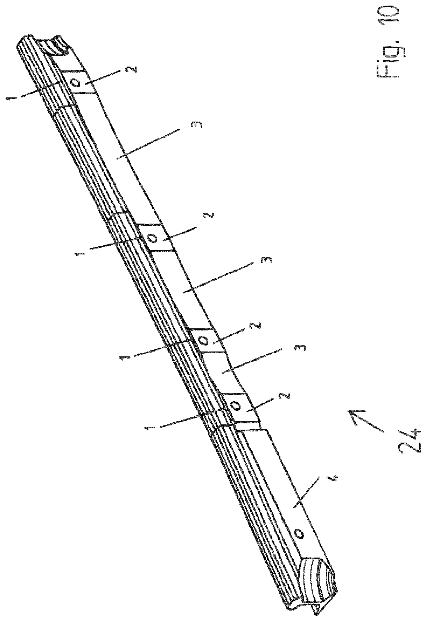

Die entsprechenden Abstandselemente des in Fig. 10 perspektiv dargestellten Abschnitts 24 sind mit dem Bezugszeichen 1 gekennzeichnet. Man erkennt, dass die Abstandselemente 1 herzstückseitig im Ausführungsbeispiel eine ein Rechteck bzw. Quadrat bildende Fläche 2 aufweisen, die an der zugewandten Außenseite der Herzstückspitze 18 zum Anliegen gelangen. Die Abstandselemente 1 weisen Bohrungen auf, die zu entsprechenden Bohrungen in der Herzstückspitze 18 beim Zusammenbau der Flügelschienen 14, 16 und des Herzstückblocks 12 fluchtend zueinander ausgerichtet sind, um eine hochfeste Schraubverbindung vorzunehmen. Die Abstandselemente 1 weisen zueinander einen Abstand auf, der dem entspricht, der üblicherweise zum Verbinden mit Herzstückblöcken benutzt wird.

Besonders hervorzuheben ist, dass der Bereich zwischen den Abstandselementen 1 einen gebogenen Verlauf aufweist. Dieser Bereich ist in Fig. 10 mit dem Bezugszeichen 3 gekennzeichnet. Hierdurch werden Querschnittssprünge zwischen den Abstandselementen 1 und dem angrenzenden Bereich der Abschnitte 22, 24 vermieden und somit verhindert, dass Spannungskonzentrationen auftreten können. Der gebogene Bereich 3, der auch als konkav zu bezeichnen ist, bietet eine quasi kontinuierliche Änderung des Widerstandsmomentes. Gebogen bedeutet dabei, dass der Bereich 3 in einem parallel zu einer von dem Herzstück 10 aufgespannten Ebene verlaufenden Schnitt gekrümmt ist, wie die Fig. 10 selbsterklärend verdeutlicht. Die gebogenen Abschnitte 3 sind auch in der Schnittdarstellung gemäß Fig. 2 erkennbar, also gemäß Fig. 2 in einer parallel zur Zeichenebene verlaufenden Ebene.

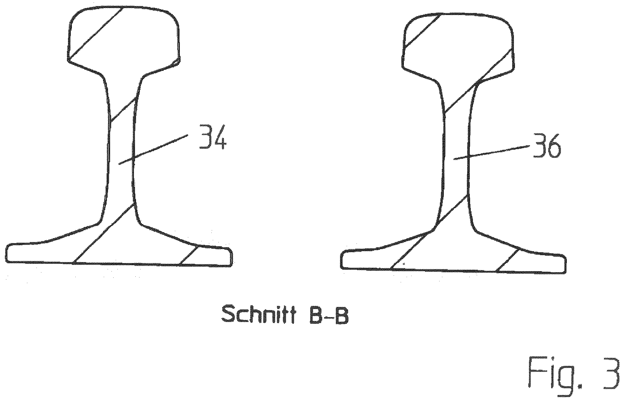

Die Geometrie der Abschnitte 22, 24 und der angrenzenden Bereiche der Flügelschienen 14, 16 ergibt sich auch aus den Schnittdarstellungen gemäß den Fig. 3 bis 7.

In Fig. 3 ist ein Schnitt entlang der Linie B-B dargestellt, also durch die Regelschienen 34, 36, die mit den Stirnflächen 26, 28 der Abschnitte 22, 24, insbesondere durch Abbrennstumpfschweißen, verbunden sind. Dabei weisen die Regelschienen 34, 36 und entsprechend die Regelschienen 38, 40 das Profil einer Vignolschiene auf.

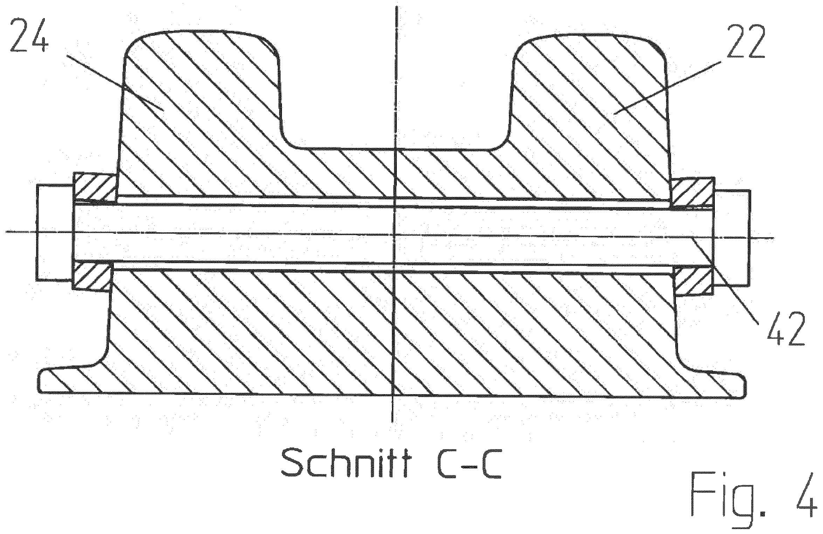

Fig. 4 stellt einen Schnitt C-C durch die Abschnitte 22, 24 dar. Die Abschnitte 22, 24 liegen flächig aufeinander und sind durch die hochfeste Schraubverbindung 42 miteinander verbunden. Der Schnittdarstellung ist auch zu entnehmen, dass die Abschnitte 22, 24 in ihren Außenseiten das Profil einer Vollschiene aufweisen.

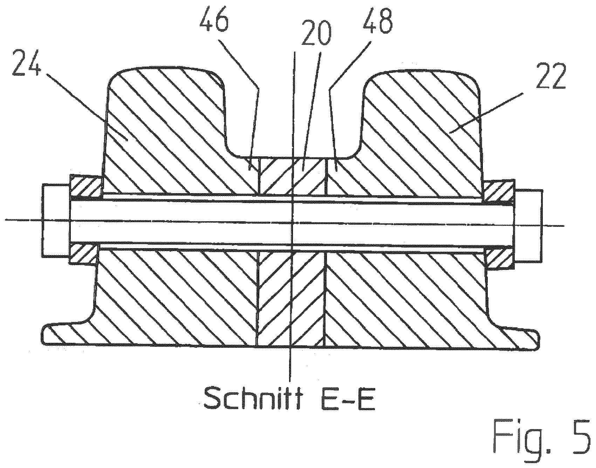

In der Schnittdarstellung der Fig. 5 (Schnitt E-E) verläuft zwischen den Abschnitten 22, 24 ein Abschnitt des Zungenschwerts 20, das flächig an den zugewandten Seiten der Abstandselemente 46, 48 der Abschnitte 22, 24 anliegt und zwischen diesen gespannt ist.

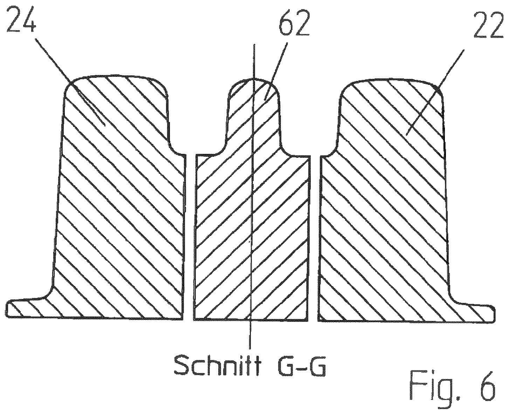

Fig. 6 zeigt den Schnitt G-G in Fig. 1, wobei der Herzstückblock 12 bzw. die Herzstückspitze 18 mit einem Abschnitt 62 zwischen den Abschnitten 22, 24 verläuft, der befahren wird. In der Prinzipdarstellung befindet sich der Schnitt G-G im Radüberlaufbereich.

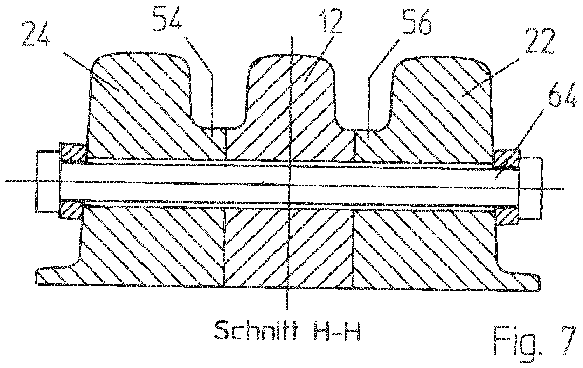

Der Schnitt H-H (Fig. 7) verläuft in einem Bereich, in dem die Abschnitte 22, 24 mit dem Herzstückblock 12 bzw. der Herzstückspitze 18 durch eine hochfeste Schraubverbindung 64 verbunden sind. In diesem Bereich befinden sich die Abstandselemente 54, 56, die in Fig. 10 mit dem Bezugszeichen 3 gekennzeichnet sind. Die freien Flächen der Abstandselemente 54, 56 liegen plan an den zugewandten Außenflächen der Herzstückspitze 12 an.

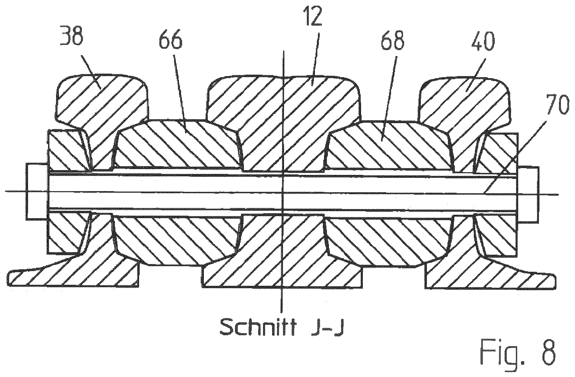

Schließlich zeigt die Fig. 8 einen Schnitt (Schnitt J-J) im Bereich der Herzstückspitze 18 bzw. des Herzstückblocks 12 außerhalb der Abschnitte 22, 24 in einem dem Weichenende zugewandten Abschnitt. Man erkennt die Regelschienen 38, 40 und die gegenüber diesen über Futterstücke 68 66 abgestützte Herzstückspitze 12 sowie die diese verbindende Verschraubung 70.

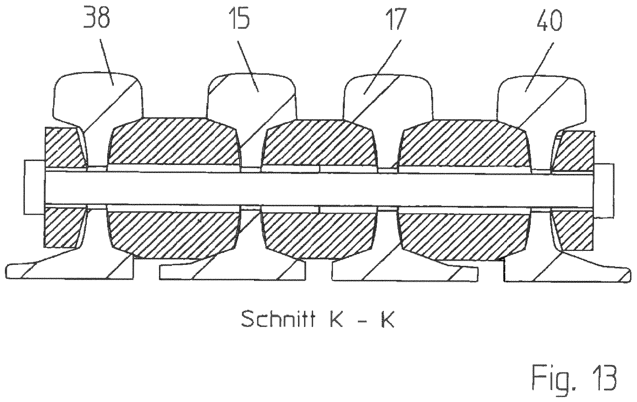

Auch im Schnitt K-K (Fig. 13) sind - wie üblich - die Anschlussschienen 15, 17 gegenüber den Regelschienen 38, 40, die die weichenendseitig verlaufenden Abschnitte der Regelschienen 14, 16 bilden, über Futterstücke abgestützt.

Die Länge des Abschnitts 22, 24 beläuft sich vorzugsweise zwischen 1500 mm und 4000 mm, wobei der Abschnitt 22, 24 in Richtung des Weichenanfangs vorzugsweise zumindest bis 140 mm vor dem Hauptknickpunkt K verlaufen sollte. In Bezug auf den weichenendseitig verlaufenden Bereich des Abschnitts 22, 24 sollte dieser sich vorzugsweise zumindest um 100 mm über das Ende des Radüberlaufbereichs R hinaus erstrecken.

Zur Montage des Herzstückbereichs 10 werden dann, wenn die Abschnitte 22, 24 aus einem einzigen Block hergestellt sind, zunächst an den Stirnseiten 26, 28, 30, 32 der Abschnitte 22, 24 die Regelschienen 34, 36, 38, 40 angeschweißt. Werden die Abschnitte 22, 24 jeweils aus Einzelblöcken hergestellt, so müssen diese entweder vor der Verbindung mit den Regelschienen 34, 36, 38, 40 oder nach dem Verbinden mit diesen untereinander verbunden werden. Sodann wird die Herzstückspitze 18, an dessen endseitig verlaufenden Stirnflächen bereits die Regelschienen 15, 17 angeschweißt sein können, also der Herzstückblock 12 in den Zwischenraum zwischen den Abschnitten 22, 24 geschoben, bis die Außenseiten der Herzstückspitze 18 an den Anlageflächen der Abstandselemente 46, 48, 50, 52, 54, 56, 58, 60 anliegen und somit die in der Herzstückspitze 18 verlaufenden Bohrungen fluchtend zu den Bohrungen verlaufen, die die Abschnitte 22, 24 in den Abstandselementen 46, 48, 50, 52, 54, 56, 58, 60 durchsetzen. Sodann erfolgt eine Verbindung mittels hochfester Schraubverbindungen.

## Patentansprüche

1. Flügelschiene (14, 16) zum Verbinden mit einem Herzstückblock (12) mit starrer Herzstückspitze (18), wobei die Flügelschiene (14, 16) über Abstandselemente (1, 46, 48, 50, 52, 54, 56, 58, 60, 66, 68) mit dem Herzstückblock (12) verbindbar ist, wobei im verbundenen Zustand im Bereich der Herzstückspitze ein Radüberlaufbereich (R) zwischen dem Herzstückblock und der Flügelschiene (14, 16) verläuft, wobei die Flügelschiene (14, 16) einen sich zumindest über die Länge des Radüberlaufbereichs (R) erstreckenden Abschnitt (22, 24) aufweist oder aus dem Abschnitt besteht, und wobei der Abschnitt aus einem geschmiedeten Block (44) hergestellt ist, **dadurch gekennzeichnet, dass** der Abschnitt (22,24) mit integral herausgearbeiteten Abstandselementen (1, 46, 48, 50, 52, 54, 56, 58, 60) hergestellt ist, und dass der Abschnitt (22,24) mit dem Herzstückblock (12) über die Abstandselemente (1, 46, 48, 50, 52, 54, 56, 58, 60) und den Herzstückblock (12) durchsetzende Schraubverbindungen (42,64) verbindbar ist.

2. Flügelschiene nach Anspruch 1,
**dadurch gekennzeichnet,**
**dass** die Flügelschiene (14, 16) zumindest einen mit dem Abschnitt (22,24) verbundenen, insbesondere aus einer Regelschiene (38, 40) bestehenden weichenanfangsseitig und/oder weichenendseitig verlaufenden Endabschnitt aufweist.

3. Flügelschiene nach Anspruch 1 oder 2,
**dadurch gekennzeichnet,**
**dass** jeder Abschnitt (22, 24) eines dem Herzstückblock (12) zugeordneten Flügelschienenpaars (14, 16) aus einem geschmiedeten Einzelblock oder die Abschnitte des Paares der Flügelschienen gemeinsam aus einem geschmiedeten Block hergestellt sind.

4. Flügelschiene nach zumindest einem der vorhergehenden Ansprüche,
**dadurch gekennzeichnet,**
**dass** herzstückblockseitig zwischen den Abstandselementen (1, 46, 48, 50, 52, 54, 56, 58, 60) verlaufende Seitenflächenabschnitte des Abschnitts (22, 24) einen gebogenen Verlauf in einer Ebene aufweist, die entlang der Hochachse des Herzstückblocks verläuft.

5. Flügelschiene nach zumindest einem der vorhergehenden Ansprüche,
**dadurch gekennzeichnet,**
**dass** der Abschnitt (22, 24) außerhalb seiner Fahrfläche zumindest abschnittsweise eine von einer Regelschiene abweichende Geometrie aufweist.

6. Flügelschiene nach zumindest einem der vorhergehenden Ansprüche,
**dadurch gekennzeichnet,**
**dass** der Abschnitt (22, 24) in seiner herzstückblockabgewandten Außenseite Kontur einer Vollschiene aufweist, die im jeweiligen stirnseitigen Endbereich des Abschnitts in eine Regelschienengeometrie übergeht.

7. Flügelschiene nach zumindest einem der vorhergehenden Ansprüche,
**dadurch gekennzeichnet,**
**dass** der Abschnitt (22, 24) bzw. die Abschnitte aus einem vorkonturierten Block hergestellt ist bzw. sind.

8. Flügelschiene nach zumindest einem der vorhergehenden Ansprüche,
**dadurch gekennzeichnet,**
**dass** sich der Abschnitt (22, 24) über eine Länge LA mit 1000 mm ≤ LA ≤ 2500 mm in Richtung des Weichenanfangs von der praktischen Spitze (19) der Herzstückspitze (18) betrachtet und/oder weichenendseitig über eine Länge LE mit 500 mm ≤ LE ≤ 1500 mm von der praktischen Herzstückspitze betrachtet hinaus erstreckt.

9. Flügelschiene nach zumindest einem der vorhergehenden Ansprüche,
**dadurch gekennzeichnet,**
**dass** der Abschnitt (22, 24) eine Härte von zumindest 300 HB, vorzugsweise zwischen 300 HB und 500 HB, aufweist.

10. Herzstück (10) umfassend einen Herzstückblock (12) und entlang dessen Außenseiten verlaufende Flügelschienen (14, 16) nach zumindest einem der vorhergehenden Ansprüche.

11. Verfahren zum Herstellen und Montieren eines Herzstücks (10) einer Weiche,
**gekennzeichnet durch** die Verfahrensschritte:
- Herstellen einer Herzstückspitze (18) oder eines Herzstückblockes (12),
- Herstellen eines Paars von Flügelschienen (10, 14), wobei ein Abschnitt (22, 24) einer jeden Flügelschiene aus einem geschmiedeten Block einer Länge herausgearbeitet wird, die sich zumindest über die gesamte Länge des Radüberlaufbereichs zwischen Herzstückspitze (18) bzw. Herzstückblock (12) und Flügelschienen erstreckt, wobei jeder Abschnitt aus dem geschmiedeten Flügelschienenblock herausgearbeitete Abstandselemente (1, 46, 48, 50, 52, 54, 56, 58, 60) aufweist, über die der Abschnitt gegenüber der Herzstückspitze (18) bzw. dem Herzstückblock (12) abgestützt ist, und wobei jeder Abschnitt an zumindest einer Stirnseite, vorzugsweise an beiden Stirnseiten, mit Schienenabschnitten (34, 36, 38, 40) wie Regelschienenabschnitten verbunden wird,
- Anordnen des Paares der Flügelschienen in einem Bereich der Weiche, wobei dann, wenn die Abschnitte der Flügelschienen jeweils aus einem geschmiedeten Einzelblock hergestellt sind, die Flügelschienen miteinander verbunden werden,
- Einschieben der Herzstückspitze (18) bzw. des Herzstückblocks (12) in den Zwischenraum zwischen den Abschnitten bis die Abstandselemente (1, 46, 48, 50, 52, 54, 56, 58, 60) an der Herzstückspitze (18) bzw. dem Herzstückblock (12) anliegen und
- Verbinden der Abschnitte mit der Herzstückspitze (18) bzw. dem Herzstückblock (12) über die Abstandselemente und die Herzstückspitze (18) bzw. den Herzstückblock (12) durchsetzende Schraubverbindungen (42, 64).

12. Verfahren nach Anspruch 11,
**dadurch gekennzeichnet,**
**dass** der Herzstückblock (12) aus einer geschmiedeten Herzstückspitze (18) mit vorzugsweise abbrennstumpfgeschweißten Anschlussschienen (15, 17) hergestellt wird.

13. Verfahren nach Anspruch 11 oder 12,
**dadurch gekennzeichnet,**
**dass** jeder Abschnitt (22, 24) an zumindest einer Stirnseite, vorzugsweise an beiden Stirnseiten, mit Schienenabschnitten (34, 36, 38, 40) wie Regelschienenabschnitten verbunden wird.

14. Verfahren nach zumindest einem der Ansprüche 11 bis 13,
**dadurch gekennzeichnet,**
**dass** der geschmiedete Block derart spanend bearbeitet wird, dass der Abschnitt (22, 24) zwischen den Abstandselementen (1, 46, 48, 50, 52, 54, 56, 58, 60) in seiner herzstückblockseitig verlaufenden Seitenfläche einen gebogenen Verlauf in einer Ebene aufweist, die sich entlang der Hochachse des Abschnitts erstreckt.

15. Verfahren nach zumindest einem der Ansprüche 11 bis 14,
**dadurch gekennzeichnet,**
**dass** die Herzstückspitze (18) aus einem geschmiedeten Block durch spanabhebende Bearbeitung herstellt wird.

## Claims

1. A wing rail (14, 16) for connecting to a frog block (12) with a rigid frog tip (18), wherein the wing rail (14, 16) is connectable by means of spacer elements (1, 46, 48, 50, 52, 54, 56, 58, 60, 66, 68) to the frog block (12), wherein in the connected state, a wheel overrunning region (R) runs between the frog block and the wing rail (14, 16) in the region of the frog tip,
wherein
the wing rail (14, 16) has or consists of a section (22, 24) extending at least over the length of the wheel overrunning region (R), and wherein
the section is produced from a forged block (44), **characterized in that**
the section (22, 24) is produced with integrally fabricated spacer elements (1, 46, 48, 50, 52, 54, 56, 58, 60), and that the section (22, 24) can be connected to the frog block (12) via the spacer elements (1, 46, 48, 50, 52, 54, 56, 58, 60) and screw connections (42, 64) passing through the frog block (12).

2. The wing rail according to claim 1,
**characterized in that**
the wing rail (14, 16) has at least one end section that is connected to the section (22, 24) and in particular consists of a standard rail (38, 40) and runs on the beginning side of the rail and on the end side of the rail.

3. The wing rail according to claim 1 or 2,
**characterized in that**
each section (22, 24) of a wing rail pair (14, 16) associated with the frog block (12) is produced from a forged single block or the sections of the pair of wing rails are produced together from a forged block.

4. The wing rail according to at least one of the preceding claims,
**characterized in that**
side surfaces sections of the section (22, 24) running between the spacer elements (1, 46, 48, 50, 52, 54, 56, 58, 60) on the frog block side have a curved progression in a plane that runs along the vertical axis of the frog block.

5. The wing rail according to at least one of the preceding claims,
**characterized in that**
the section (22, 24) has outside of its running surface, at least in sections, a geometry deviating from a standard rail.

6. The wing rail according to at least one of the preceding claims,
**characterized in that**
in its outer side facing away from the frog block, the section (22, 24) has the contour of a full rail which transitions into a standard rail geometry in the respective face-side end region of the section.

7. The wing rail according to at least one of the preceding claims,
**characterized in that**
the section (22, 24) or the sections is/are produced from a pre-contoured block.

8. The wing rail according to at least one of the preceding claims,
**characterized in that**
the section (22, 24) extends over a length LA of 1000 mm ≤ LA ≤ 2500 mm, as viewed in the direction of the beginning of the switch from the practical tip (19) of the frog tip (18), and/or over a length LE of 500 mm ≤ LE ≤ 1500 mm on the end side of the switch as viewed from the practical frog tip.

9. The wing rail according to at least one of the preceding claims,
**characterized in that**
the section (22, 24) has a hardness of at least 300 HB, preferably between 300 HB and 500 HB.

10. A frog (10) comprising a frog block (12) and wing rails (14, 16) running along its outer sides according to at least one of the preceding claims.

11. A method for producing and assembling a frog (10) of a switch, **characterized by** the method steps:
- producing a frog tip (18) or a frog block (12),
- producing a pair of wing rails (10, 14), wherein a section (22, 24) of each wing rail is fabricated from a forged block with a length extending at least over the entire length of the wheel overrunning region between the frog tip (18) or frog block (12) and wings rails, wherein each section has spacer elements (1, 46, 48, 50, 52, 54, 56, 58, 60) which are fabricated from the forged wing rail block and by means of which the section is braced against the frog tip (18) or the frog block (12), and wherein each section is connected to rail sections (34, 36, 38, 40), such as standard rail sections, on at least one face, preferably on both faces.
- arranging the pair of wing rails in a region of the switch, wherein if the sections of the wing rails are each made of a forged single block, the wing rails are connected to each other,
- inserting the frog tip (18) or the frog block (12) into the intermediate space between the sections until the spacer elements (1, 46, 48, 50, 52, 54, 56, 58, 60) lie against the frog tip (18) or the frog block (12), and
- connecting the sections to the frog tip (18) or the frog block (12) by means of the spacer elements and the screw connections (42, 64) passing through the frog tip (18) or the frog block (12).

12. The method according to claim 11,
**characterized in that**
the frog block (12) is produced from a forged frog tip (18) with preferably flash-butt welded connecting rails (15, 17).

13. The method according to claim 11 or 12,
**characterized in that**
each section (22, 24) is connected to rail sections (34, 36, 38, 40), such as standard rail sections, on at least one face, preferably on both faces.

14. The method according to at least one of claims 11 to 13,
**characterized in that**
the forged block is machined in such a manner that the section (22, 24) between the spacer elements (1, 46, 48, 50, 52, 54, 56, 58, 60) has, in its side surface running on the frog block side, a curved progression in a plane extending along the vertical axis of the section.

15. The method according to at least one of claims 11 to 14,
**characterized in that**
the frog tip (18) is produced from a forged block by machining.

## Revendications

1. Rail à ailerons (14, 16) destiné à être relié à un bloc de coeur de croisement (12) avec une pointe de coeur de croisement rigide (18), dans lequel le rail à ailerons (14, 16) peut être relié par le biais d'éléments d'espacement (1, 46, 48, 50, 52, 54, 56, 58, 60, 66, 68) avec le bloc de coeur de croisement (12), dans lequel, dans l'état relié, dans la zone de la pointe de coeur de croisement s'étend une zone de débordement de roue (R) entre le bloc de coeur de croisement et le rail à ailerons (14, 16), dans lequel
le rail à ailerons (14, 16) présente une section (22, 24) s'étendant au moins sur la longueur de la zone de débordement de roue (R) ou est constitué de la section et dans lequel
la section est fabriquée à partir d'un bloc forgé (44),
**caractérisé en ce que**
la section (22, 24) est fabriquée avec des éléments d'espacement (1, 46, 48, 50, 52, 54, 56, 58, 60) façonnés intégralement et **en ce que** la section (22, 24) peut être reliée au bloc de coeur de croisement (12) par le biais des éléments d'espacement (1, 46, 48, 50, 52, 54, 56, 58, 60) et des raccords vissés (42, 64) traversant le bloc de coeur de croisement (12).

2. Rail à ailerons selon la revendication 1,
**caractérisé en ce que**
le rail à ailerons (14, 16) présente au moins une section terminale reliée à la section (22, 24), en particulier constituée d'un rail standard (38, 40), s'étendant côté début de l'aiguillage et/ou côté fin de l'aiguillage.

3. Rail à ailerons selon la revendication 1 ou 2,
**caractérisé en ce que**
chaque section (22, 24) d'une paire de rails à ailerons (14, 16) attribuée au bloc de coeur de croisement (12) est fabriquée d'un bloc unique forgé ou **en ce que** les sections d'une paire des rails à ailerons sont fabriquées ensemble à partir d'un bloc forgé.

4. Rail à ailerons selon au moins une des revendications précédentes,
**caractérisé en ce que**,
côté bloc de coeur de croisement, des sections de surface latérale de la section (22, 24) s'étendant entre les éléments d'espacement (1, 46, 48, 50, 52, 54, 56, 58, 60) présentent un tracé incurvé dans un plan, qui s'étend le long de l'axe vertical du bloc de coeur de croisement.

5. Rail à ailerons selon au moins une des revendications précédentes,
**caractérisé en ce que**
la section (22, 24), en dehors de sa surface de roulement, présente par sections une géométrie différente de celle d'un rail standard.

6. Rail à ailerons selon au moins une des revendications précédentes,
**caractérisé en ce que**
la section (22, 24) présente le contour d'un rail plein dans sa face externe opposée au bloc de coeur de croisement, qui se transforme en la zone terminale côté avant respective de la section en une géométrie de rail standard.

7. Rail à ailerons selon au moins une des revendications précédentes,
**caractérisé en ce que**
la section (22, 24) ou les sections est ou sont fabriquée(s) à partir d'un bloc pré-profilé.

8. Rail à ailerons selon au moins une des revendications précédentes,
**caractérisé en ce que**
la section (22, 24) s'étend sur une longueur LA, avec 1000 mm ≤ LA ≤ 2500 mm en direction du début de l'aiguillage, observée depuis la pointe pratique (19) de la pointe de coeur de croisement (18) et/ou, côté fin de l'aiguillage, sur une longueur LE, avec 500 mm ≤ LE ≤ 1500 mm observée depuis la pointe de coeur de croisement pratique.

9. Rail à ailerons selon au moins une des revendications précédentes,
**caractérisé en ce que**
la section (22, 24) présente une dureté d'au moins 300 HB, de préférence entre 300 HB et 500 HB.

10. Coeur de croisement (10) comprenant un bloc de coeur de croisement (12) et des rails à ailerons (14, 16) selon au moins une des revendications précédentes le long de ses côtés externes.

11. Procédé de fabrication et de montage d'un coeur de croisement (10) d'un aiguillage,
**caractérisé par**
les étapes de procédé consistant à :
- fabriquer une pointe de coeur de croisement (18) ou un bloc de coeur de croisement (12),
- fabriquer une paire de rails à ailerons (10, 14), dans lequel une section (22, 24) de chacun des rails est usinée à partir d'un bloc forgé d'une longueur, qui s'étend au moins sur toute la longueur de la zone de débordement de roue entre la pointe de coeur de croisement (18) ou le bloc de coeur de croisement (12) et les rails à ailerons, dans lequel chaque section présente des éléments d'espacement (1, 46, 48, 50, 52, 54, 56, 58, 60) usinés à partir du bloc de rails à ailerons forgé, sur lesquels la section vient en appui par rapport à la pointe de coeur de croisement (18) ou au bloc de coeur de croisement (12) et dans lequel chaque section est reliée, au moins au niveau d'une face avant, de préférence au niveau des deux faces avant, avec des sections de rail (34, 36, 38, 40) comme les sections de rail standard,
- agencer la paire de rails à ailerons dans une zone de l'aiguillage, dans lequel, lorsque les sections des rails à ailerons sont fabriquées respectivement à partir d'un bloc unique forgé, les rails à ailerons sont reliés les uns aux autres,
- insérer la pointe de coeur de croisement (18) ou le bloc de coeur de croisement (12) dans l'espace intermédiaire entre les sections jusqu'à ce que les éléments d'espacement (1, 46, 48, 50, 52, 54, 56, 58, 60) reposent sur la pointe de coeur de croisement (18) ou sur le bloc de coeur de croisement (12) et
- relier les sections avec la pointe de coeur de croisement (18) ou le bloc de coeur de croisement (12) par le biais des éléments d'espacement et des raccords vissés (42, 64) de la pointe de coeur de croisement (18) ou du bloc de coeur de croisement (12).

12. Procédé selon la revendication 11,
**caractérisé en ce que**
le bloc de coeur de croisement (12) est fabriqué à partir d'une pointe de coeur de croisement (18) avec des rails de raccordement (15, 17) de préférence soudés en bout par étincelage.

13. Procédé selon la revendication 11 ou 12,
**caractérisé en ce que**
chaque section (22, 24) est reliée au niveau d'au moins une face avant, de préférence au niveau des deux faces avant, avec des sections de rail (34, 36, 38, 40) comme les sections de rail standard.

14. Procédé selon au moins une des revendications 11 à 13,
**caractérisé en ce que**
le bloc forgé est usiné par enlèvement de matière de sorte que la section (22, 24) présente, entre les éléments d'espacement (1, 46, 48, 50, 52, 54, 56, 58, 60) dans sa surface latérale s'étendant côté bloc de coeur de croisement, un tracé incurvé dans un plan, qui s'étend le long de l'axe vertical de la section.

15. Procédé selon au moins une des revendications 11 à 14,
**caractérisé en ce que**
la pointe de coeur de croisement (18) est fabriquée à partir d'un bloc forgé par usinage par enlèvement de matière.
